# EUROPÄISCHE PATENTSCHRIFT

(11) **EP 3 798 057 B1**
(45) Veröffentlichungstag und Bekanntmachung des Hinweises auf die Patenterteilung: **17.07.2024**
(21) Anmeldenummer: 20193704.2
(22) Anmeldetag: 31.08.2020
(51) Int. Cl.: B60Q 3/00, B64D 11/00

(54) **BELEUCHTUNGSSYSTEM FÜR DEN KABINENINNENRAUM EINES FAHRZEUGS**
ILLUMINATION SYSTEM FOR THE INTERIOR OF A VEHICLE
SYSTÈME D'ÉCLAIRAGE POUR L'ESPACE INTÉRIEUR DE CABINE D'UN VÉHICULE

(30) Priorität: 26.09.2019 DE 102019126019
(43) Veröffentlichungstag der Anmeldung: 31.03.2021
(73) Patentinhaber: Lufthansa Technik AG, 22335 Hamburg (DE)
(72) Erfinder: Reichenecker, Michael, 10625 Berlin (DE); Sanders, Malte, 20097 Hamburg (DE); Reifferscheid, Moritz, 21483 Basedow (DE)
(74) Vertreter: Müller Verweyen

(56) Entgegenhaltungen:
- DE-A1- 102017 217 916
- DE-A1- 102017 220 355
- JP-A- 2016 149 264
- US-A1- 2008 316 740
- US-B1- 10 392 129

## Beschreibung

Die vorliegende Erfindung betrifft ein Beleuchtungssystem für den Innenraum eines Fahrzeugs, insbesondere den Kabineninnenraum eines Luftfahrzeugs.

Je nach Bedarf sind Flugzeugkabinen mit einer Vielzahl von funktionellen Auskleidungen versehen. Insbesondere für die Innenraumbeleuchtung hat sich je nach Bedarf und Ausstattung eine große Variantenvielfalt etabliert. Allgemein sind in Flugzeugkabinen eine Kombination einer Vielzahl von unterschiedlichen Beleuchtungsformen vorhanden. So ist im Deckenbereich zur allgemeinen Kabinenausleuchtung oftmals eine Kombination von Punktbeleuchtung und indirekter Flächenbeleuchtung vorgesehen. Weiters ist oftmals indirekte Beleuchtung an den Seitenverkleidungen vorgesehen sowie weitere Punktbeleuchtung etwa in Form von Leselampen oder Tischbeleuchtung sowie individuelle Leuchtkörper, die von einem Benutzer, bzw. Passagier individuell steuerbar sind. Auch zu Sicherheitszwecken sind eine Vielzahl von technischen Beleuchtungen und Notfallleuchten (etwa Leuchtpfeile, die im Notfall den kürzesten Weg zu einem Notausstieg weisen) vorgesehen. Aus diesem Grund ist es notwendig, bereits im Anfangsstadium der Planungsphase einer Kabinenausstattung die Position der Leuchtkörper, insbesondere der Deckenbeleuchtung, festzulegen und für die Fertigung der Kabinenauskleidungselemente zu berücksichtigen.

Eine Möglichkeit große Flächen, insbesondere die Deckenflächen indirekt zu beleuchten ist durch die Verwendung von Projektoren im Deckenbereich bekannt. Dabei kann eine Dekorationsbeleuchtung auf der Deckenfläche verwirklicht werden. Eine technische Hürde stellt hier jedoch ein flacher Einstrahlwinkel dar, weshalb projizierte Objekte mittels einer Software entzerrt werden müssen. Die Verwendung in Luftfahrzeugen ist aber auch wegen der entstehenden Vibrationen im Flugbetrieb problematisch. Außerdem ist eine derartige Beleuchtung lediglich zur Dekorationsbeleuchtung geeignet und nicht für technische Beleuchtung oder Notfallbeleuchtung.

Aus der US 10,392,129 B1 ist ein Panel mit LEDs für ein Flugzeug bekannt, das sowohl als Beleuchtung als auch als Display nutzbar ist.

Ferner offenbaren die Druckschriften JP 2016-149264 A, US 2008/0316740 A1, DE 10 2017 217 916 A1 und DE 10 2017 220 355 A1 Beleuchtungen mit einer Vielzahl an LEDs.

Vor diesem Hintergrund liegt der Erfindung die Aufgabe zugrunde, ein verbessertes Beleuchtungssystem bereitzustellen, das eine großflächige und kleinteilige Beleuchtung ermöglicht und den Planungsaufwand für Beleuchtungskonzepte erheblich reduziert.

Zur Lösung der Aufgabe wird erfindungsgemäß ein Beleuchtungssystem mit den Merkmalen des Anspruchs 1 vorgeschlagen. Weitere bevorzugte Weiterentwicklungen sind den Unteransprüchen, den Figuren und der zugehörigen Beschreibung zu entnehmen.

Gemäß dem Grundgedanken der Erfindung wird ein Beleuchtungssystem vorgeschlagen, umfassend ein Gehäuse mit einer Montageseite und einer gegenüberliegenden Beleuchtungsseite, einer Mehrzahl von LED-Leuchtmitteln, einer auf der Montageseite angeordneten Trägerschicht, wobei die Mehrzahl von LED-Leuchtmitteln in einer netzartigen Matrixstruktur auf der Trägerschicht angeordnet sind, wobei Steuerelemente und Energieversorgungselemente zur signaltechnischen Ansteuerung und elektrischen Versorgung der LED-Leuchtmittel auf der Trägerschicht angeordnet sind, wobei eine transluzente Diffusorschicht beabstandet von der Trägerschicht mit den LED-Leuchtmitteln angeordnet ist und eine Leuchtfläche der Beleuchtungsseite bildet.

Der Vorteil der vorgeschlagenen Lösung ist darin zu sehen, dass durch den erfindungsgemäßen Aufbau eine Flächenbeleuchtung möglich wird. Durch eine geeignete Anordnung der LEDs und Abdeckung des Gehäuses mit der speziellen Diffusorschicht wird es möglich, dass die Oberfläche der Beleuchtungsseite selbst als Leuchtfläche in hoher Lichtstärke verwendet werden kann. Dadurch kann das Beleuchtungssystem sowohl als Dekorationsbeleuchtung als auch als technische Beleuchtung betrieben werden. Die einzelnen Leuchtelemente können dabei einzeln angesteuert werden, so dass nur bestimmte definierte Bereiche leuchten oder die ganze Fläche leuchtet. Durch die Wahl eines geeigneten Abstands zwischen der transluzenten, also opaken, aber dennoch lichtdurchlässigen Diffusorschicht entsteht eine homogene Lichtabstrahlung, bei der die einzelnen LED-Leuchtmittel als Leuchtpunkte von einem Betrachter aus nicht mehr individuell sichtbar sind. Durch den erfindungsgemäßen Aufbau hat das Gehäuse des Beleuchtungssystems einen flachen Aufbau, wobei die genauen Abmaße über große Flächen und Formen frei wählbar sind. So kann beispielsweise die gesamte Deckenfläche oder Seitenverkleidung der Kabine mit einem erfindungsgemäßen Beleuchtungssystem bedeckt sein. Die Form ist dann frei anpassbar, so dass nötige Aussparungen für die Fenster oder Gepäckfächer oder Notfallklappen mit Sicherheitsvorrichtungen wie Sauerstoffmasken vorgesehen sind. Das Beleuchtungsgehäuse an sich bildet in dem Fall selbst die Innenraumverkleidung der Kabine. Das Beleuchtungssystem ist skalierbar, so dass große Flächen von einzelnen angepassten Gehäusen oder modular durch mehrere kleinere Einheiten gebildet werden können. Insgesamt lässt sich die Anzahl verschiedener relevanter Beleuchtungsszenarien mit dem Beleuchtungssystem deutlich erhöhen.

Auf diese Weise muss die Position der Leuchtkörper nicht am Anfang der Planungsphase eines Innenraumprojekts festgelegt werden, sondern kann später sogar nach Fertigstellung des Innenausbaus eines Fahrzeugs festgelegt werden und jederzeit angepasst werden.

Vorzugsweise sind die LED-Leuchtmittel durch RGB-LEDs und wei-ße LEDs gebildet. Eine RGB-LED ist im Prinzip ein LED-Leuchtmittel bestehend aus drei Farb-LEDs: rot (R), grün (G) und blau (B). eine RGB-LED kann verschiedene Farben ausgeben, indem sie diese drei Grundfarben mischt und auch die Intensität ändert. Durch die Verwendung von RGB-LEDs und weißen LEDs in Verbindung mit der Diffusorplatte wird eine leuchtstarke Oberfläche gebildet, die in einzelnen Bereichen separat ansteuerbar ist und somit unterschiedliche Beleuchtungsszenarien, von indirekter Beleuchtung, Dimmung, punktuelle Beleuchtung, weiße oder farbliche Beleuchtung ermöglicht und dadurch sowohl für Dekorationsbeleuchtung als auch für technische Beleuchtung eingesetzt werden kann.

Vorzugsweise ist das Verhältnis der Anzahl von RGB-LEDs zu weißen LEDs im Beleuchtungssystem eins zu eins. Erfindungsgemäß ist in der netzartigen Matrixstruktur der LED-Leuchtmittel der Abstand benachbarter LED-Leuchtmittel in einer ersten X-Richtung genau so groß wie in einer zweiten, senkrecht zur X-Richtung stehenden Y-Richtung. Dies führt zu einer gleichmäßigen Lichtverteilung und erhöht die Anpassbarkeit des Beleuchtungssystems.

Weiter wird die Anpassbarkeit des Beleuchtungssystems dadurch erhöht, dass sowohl in X-Richtung als auch in Y-Richtung RGB-LEDs und weiße LEDs abwechselnd angeordnet sind.

Erfindungsgemäß beträgt der Abstand zweier benachbarter LED-Leuchtmittel 0,7 cm bis 6 cm und die Dichte der LED-Leuchtmittel auf der Trägerplatte 250 bis 21000 LEDs/m². Durch eine derartige Anordnung der LED-Leuchtmittel lassen sich sowohl eine Dekorationsbeleuchtung als auch eine ausreichende Kabinenbeleuchtung realisieren. Des Weiteren ermöglicht eine größere Leuchtmitteldichte eine detailliertere Beleuchtung, beziehungsweise eine bessere Darstellung von Beleuchtungsmustern oder kleinräumigen Beleuchtungselementen, beispielsweise Orientierungshilfen im Rahmen einer Notbeleuchtung. Für Kabinenbereiche, in denen eine geringere Komplexität geplant ist, beispielsweise nur großräumige und flächige Beleuchtung, können hingegen Module mit einer geringeren Leuchtmitteldichte zu reduziertem Material- und Kostenaufwand führen.

Die transluzente Diffusorschicht ist erfindungsgemäß in einem Abstand von 1 cm bis 10 cm von der LED-Trägerschicht angeordnet. Dadurch wird zum einen ein insgesamt flacher Aufbau des Beleuchtungssystems ermöglicht und zum anderen sorgt die Diffusorschicht für eine gleichmäßige Abstrahlung der dahinter liegenden LED-Leuchtmittel.

Weiter ist bevorzugt, dass die Diffusorschicht gewölbt ist. Insbesondere im Deckenbereich, wo sich das Beleuchtungselement über eine große Fläche erstreckt, ist es vorteilhaft, dass die Diffusorschicht durch einen geeigneten Radius einer Wölbung eine strukturelle Eigenspannung erhält, wodurch zum einen sichtbare Befestigungselemente möglichst entfallen können und zum anderen eine strukturelle Versteifung erreicht wird, wodurch Eigenschwingungen der Diffusorplatte verringert werden.

Um eine ausreichende Stabilität zu gewährleisten, beträgt die Dicke der Diffusorschicht erfindungsgemäß 1 mm bis 10 mm und besonders bevorzugt 3 mm.

Die Diffusorschicht ist bevorzugt aus Polycarbonat gebildet. Durch ein derartiges Material lassen sich die funktionellen optischen Eigenschaften der Diffusorplatte realisieren und zusätzlich lassen sich dadurch auch brandschutztechnische Vorgaben einhalten. Dabei sind aber auch weitere brandschutztechnisch zugelassene Materialien denkbar und Gegenstand der Erfindungsoffenbarung, insbesondere Faserkunststoffe aus der Gruppe der Polyamine oder schwer entflammbare Verbundwerkstoffe aus Epoxidharz und/oder Glasfasergewebe.

Die Gesamthöhe des Beleuchtungssystems beziehungsweise des Gehäuses ist bevorzugt kleiner als 10 cm. Durch den flachen und vergleichsweise leichten Aufbau lassen sich großflächige, plattenförmige Beleuchtungspaneele realisieren, die sich gut zur vollflächigen Verkleidung der Kabinenwände und -decken eignen. Die Gehäuse des Beleuchtungssystems lassen sich alternativ aber auch je nach Anwendungsfall als komplexe geometrische 3D-Formen umsetzen. Das Beleuchtungssystem ist insgesamt hinsichtlich des Gesamtaufbaus robust und wenig störungsanfällig.

Vorzugsweise sind die Leuchtpunkte, die durch die einzelnen LED-Leuchtmittel gebildet sind, einzeln ansteuerbar und hinsichtlich ihrer Aktivierung, Aktivierungszeit, Leuchtstärke und Leuchtfarbe individuell regelbar. Dadurch kann das Leuchtsystem sowohl als Dekorationsbeleuchtung, als auch zur technischen Beleuchtung eingesetzt werden. Dabei können etwa nur bestimmte definierte Bereiche (zum Beispiel über einem Esstisch) leuchten oder Bereiche gar nicht oder schwächer leuchten. Die Leuchtfläche kann auch monitorartig mit bewegten Inhalten betrieben werden, so dass in Teilbereichen oder vollflächig Animationen (zum Beispiel Wolkenanimationen) abgespielt werden können.

In einer weiter bevorzugten Ausführungsform ist für das Beleuchtungssystem eine Interaktionsvorrichtung vorgesehen, über welche die Beleuchtung durch einen Benutzer mittels einer Steuerungssoftware manuell einstellbar ist. Dadurch besteht die Möglichkeit für einen Benutzer Einfluss auf die Beleuchtung zu nehmen. Eine derartige Interaktionsvorrichtung kann beispielsweise durch einen Tablet- oder Touchscreen Computer gebildet sein, der signaltechnisch mit der Steuerungselektronik des Beleuchtungssystems verbunden ist und vollflächig oder in definierten Teilbereichen über die Interaktionsvorrichtung steuerbar ist. So ist vorstellbar, dass im Rahmen einer Dekorations- und Entertainmentbeleuchtung Audiosignale, wie zum Beispiel Musik, visuell abgebildet werden, oder dass das Beleuchtungselement als digitale Mal- und Zeichenfläche verwendet werden kann.

Die Erfindung wird im Folgenden anhand bevorzugter Ausführungsformen unter Bezugnahme auf die beigefügten Figuren erläutert. Dabei zeigt
- Fig. 1: schematisch ein herkömmliches Beleuchtungsszenario einer Flugzeugkabine;
- Fig. 2: schematisch ein Beleuchtungsszenario einer Flugzeugkabine mit einem erfindungsgemäßen Beleuchtungssystem;
- Fig. 3: schematisch ein weiteres Beleuchtungsszenario einer Flugzeugkabine mit einem erfindungsgemäßen Beleuchtungssystem;
- Fig. 4: schematisch die Funktionsweise eines erfindungsgemäßen Beleuchtungssystems;
- Fig. 5: schematisch eine Trägerplatte mit darauf angeordneten LED-Leuchtmitteln;
- Fig. 6: einen Teilausschnitt der Trägerplatte mit darauf angeordneten LED-Leuchtmitteln;
- Fig. 7: einen Querschnitt des Gehäuses eines Moduls des erfindungsgemäßen Beleuchtungssystems;
- Fig. 8: schematisch ein Modul des erfindungsgemäßen Beleuchtungssystems.

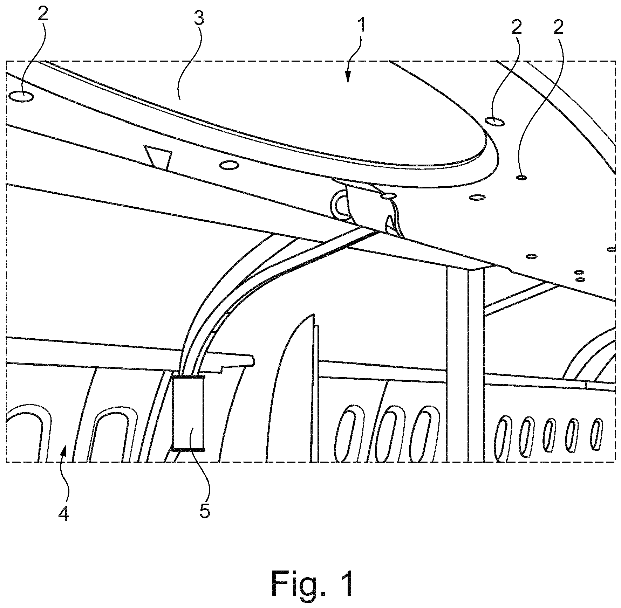

Gemäß dem Stand der Technik wird, wie in Fig. 1 dargestellt, die Kabineninnenbeleuchtung durch eine Kombination von verschiedenen Beleuchtungselementen realisiert. Dabei sind im Deckenbereich 1 der Kabine sowohl Punktbeleuchtung 2, als auch indirekte Beleuchtungselemente 3 vorgesehen. Ebenso sind im Bereich der Seitenverkleidung 4 indirekte Beleuchtungselemente 3 vorgesehen. Außerdem werden individuelle Leuchtkörper 5 verwendet, um einzelne dekorative Elemente zu betonen, wie beispielsweise einen Esstisch. Eine derartige konventionelle Beleuchtung weist eine eingeschränkte Flexibilität auf, da bereits hinsichtlich der Anzahl, Art und Position der Leuchten frühzeitig im Planungsstadium eine Festlegung erfolgen muss, die später nur mit hohem Material- und Arbeitsaufwand geändert werden kann, da strukturelle Verkleidungsbauteile und Versorgungsleitungen geändert, beziehungsweise ausgetauscht werden müssen. Zudem ist keine Kombination von Dekorationsbeleuchtung, technischer Beleuchtung und Animation möglich.

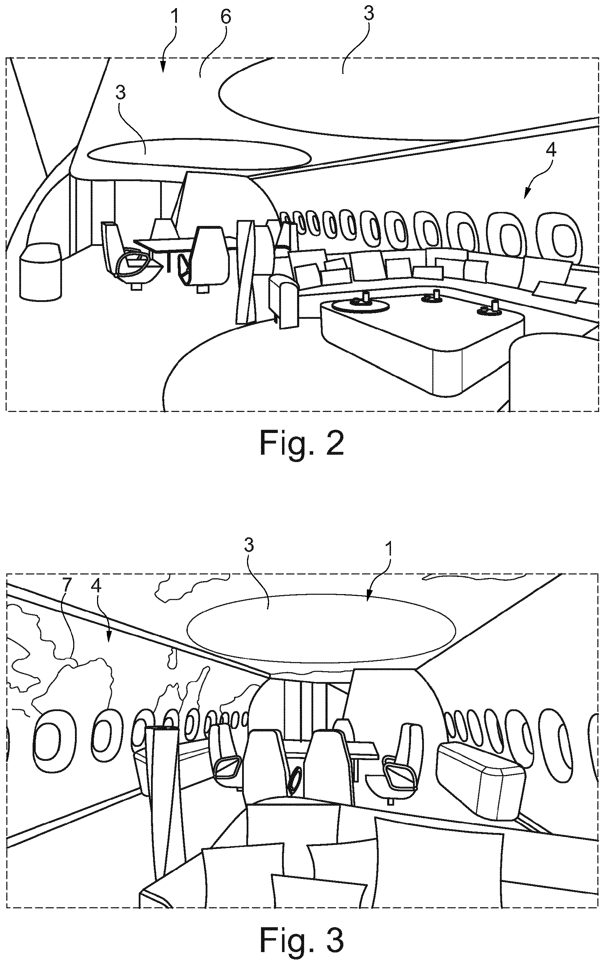

In den Fign. 2 und 3 sind sowohl der Deckenbereich 1 als auch die Seitenbereiche 4 vollflächig mit einem erfindungsgemäßen Beleuchtungssystem ausgestattet. Wie in Fig. 2 im Seitenbereich 4 ersichtlich, ist es möglich, über die gesamte Fläche eine gleichmäßige indirekte Beleuchtung 3 zu realisieren. Im Deckenbereich 1 ist hingegen nur ein Teilbereich 3 beleuchtet, während große Areale 6 unbeleuchtet sind. Die Beleuchtung ist jedoch nicht auf diese Einteilung festgelegt, vielmehr können auch die nicht beleuchteten Areale 6 vom Beleuchtungssystem angesteuert werden. Es ist ebenfalls möglich, dass nur wesentlich kleinere Bereiche aktiviert sind, um beispielsweise eine Punktbeleuchtung zu simulieren. Es ist also möglich, alle bekannten herkömmlichen Beleuchtungsszenarien zu realisieren, jedoch flexibel anpassbar. Zusätzlich kann das erfindungsgemä-ße Beleuchtungssystem mit großflächigen, monitorartigen bewegten Inhalten betrieben werden, wie in Fig. 3 im Seitenbereich 4 mit der Animation 7 eines Wolkenhimmels gezeigt ist.

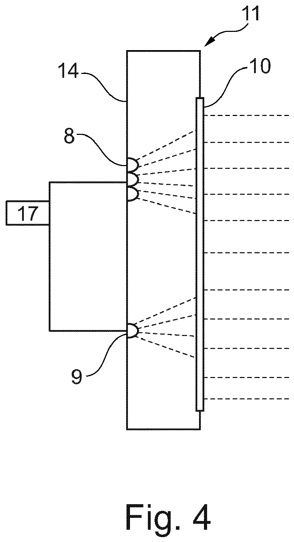

Die Funktionsweise des erfindungsgemäßen Beleuchtungssystems ist in Fig. 4 vorgesehen. Dabei werden als Leuchtmittel LED-Leuchtmittel 8, 9 verwendet. Diese sind individuell ansteuerbar, so dass eine Vielzahl von Beleuchtungsszenarien wie in den Fign. 2 und 3 dargestellt, realisiert werden kann. Von den LED-Leuchtmitteln 8, 9 beabstandet ist eine transluzente Diffusorschicht 10 vorgesehen, durch die eine gleichmäßige Abstrahlung der dahinterliegenden LED-Leuchtmittel 8, 9 ermöglicht wird. Es ist dabei vorteilhaft, dass RGB-LEDs 8 und wei-ße LEDs 9 verwendet werden.

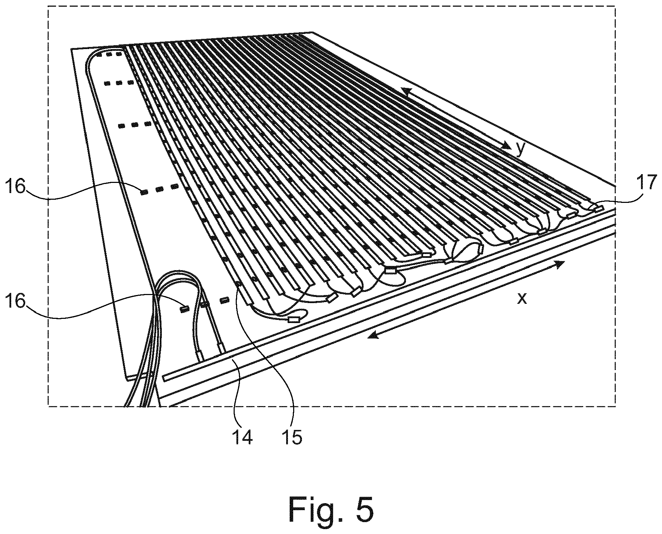

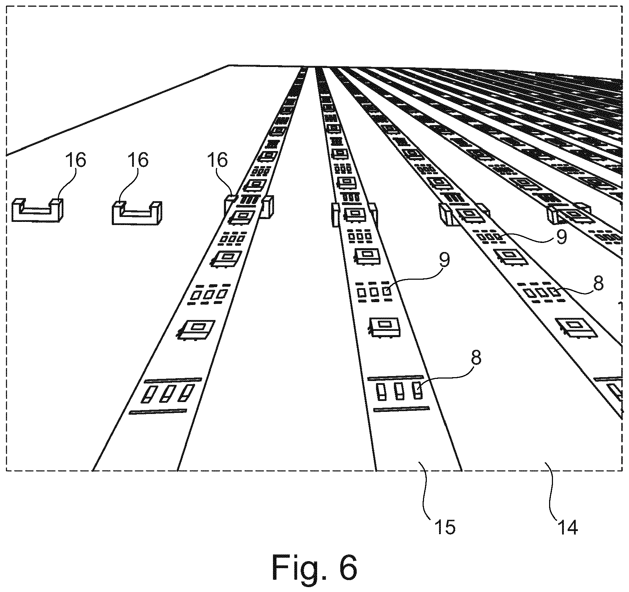

Die LED-Leuchtmittel 8, 9 sind in einer netzartigen Matrixstruktur angeordnet (Fig. 5). Diese sind zur besseren Montage in einem Gehäuse 11 angeordnet. Das Gehäuse weist eine Montageseite 12 und eine gegenüberliegende Beleuchtungsseite 13 auf. Die Montageseite 12 ist durch eine Trägerschicht 14 gebildet, auf der die LED-Leuchtmittel 8, 9 angeordnet sind. In dem dargestellten Ausführungsbeispiel sind die LED-Leuchtmittel 8, 9 zur besseren Montage auf LED-Streifen 15 angeordnet. Die LED-Streifen 15 sind dabei mit korrespondierenden Halteelementen 16 fixiert. Auf der Trägerschicht 14 sind außerdem alle relevanten Ansteuerungs- und Energieversorgungsvorrichtungen 17 untergebracht. Vorzugsweise sind die RGB-LEDs 8 und die weißen LEDs 9 abwechselnd auf den LED-Streifen 15 angeordnet, wobei die Abstände der LED-Leuchtmittel 8, 9 auf den LED-Streifen 15 dem Abstand zweier benachbarter LED-Streifen 15 entspricht, so dass eine gleichmäßige netzartige Verteilung realisiert ist (Fig. 6). Die Abstände der LED-Leuchtmittel 8, 9 in einer ersten X-Richtung sind also in etwa genau so groß wie auf einer zur X-Richtung senkrechten Y-Richtung. Alternativ zu RGB-LEDs 8 und weißen LEDs 9 können auf den LED-Streifen 15 auch kombinierte RGBW-LEDs (8, 9) eingesetzt werden. Diese haben zwar insgesamt eine geringere Lichtleistung, jedoch ergibt sich ein harmonischeres Gesamtlichtspektrum, so dass eine natürlichere Farbwiedergabe, ähnlich dem Sonnenspektrum, erreicht wird. Dieses natürlichere Farbspektrum wird in der Regel von Personen als angenehmer empfunden.

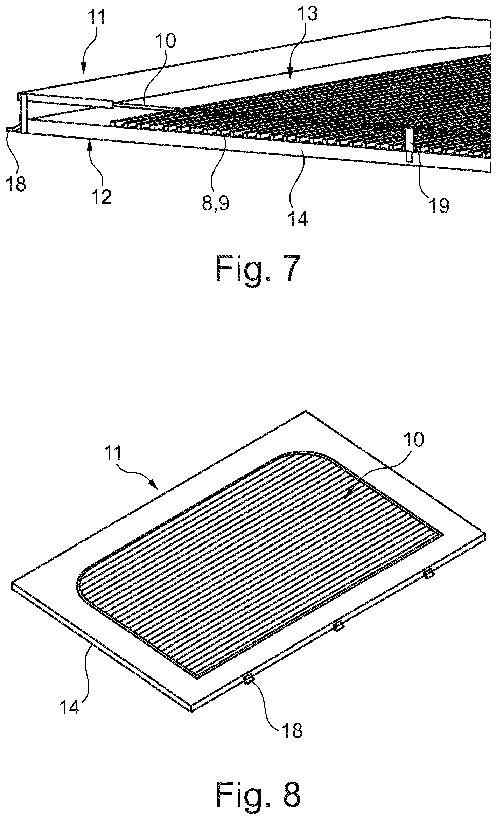

In den Fign. 7, 8 ist ein Gehäuse 11 eines Moduls des Beleuchtungssystems im Querschnitt (Fig. 7) und im Ganzen (Fig. 8) dargestellt. Das Gehäuse 11 umfasst auf der Montageseite 12 eine Trägerschicht 14, auf der die LED-Leuchtmittel 8, 9 angeordnet sind, Montageelemente 18 zur Montage des Gehäuses 11 an der Wandverkleidung einer Flugzeugkabine und auf der Beleuchtungsseite 13 eine transluzente Diffusorschicht 10. Die Diffusorschicht 10 ist vorzugsweise aus Polycarbonat hergestellt, so dass sowohl eine gleichmäßige Abstrahlung der dahinter liegenden LED-Leuchtmittel 8, 9 als auch eine ausreichende Brandsicherheit gewährleistet ist. Die Diffusorschicht 10 ist beabstandet von der LED-Matrix angeordnet, wobei aufgrund der gro-ßen Fläche der Diffusorschicht 10 zusätzlich Abstandshalter 19 vorgesehen sein können. Die einzelnen Module sind skalierbar, so dass auch Elemente von mehreren Metern Ausdehnung realisiert werden können, womit die gesamte Innenverkleidung der Kabine ausgestattet werden kann. Durch die Verwendung einer Kombination von RGB-LEDs 8 und weißen LEDs 9, beziehungsweise von kombinierten RGBW-LEDs 8, 9 sowie der Diffusorschicht 10 wird eine hohe Leuchtstärke bei geringer Aufbauhöhe erreicht. Es besteht die Möglichkeit, die Diffusorschicht 10 durch Wölbung mittels Eigenspannung zu versteifen und so Eigenschwingungen zu reduzieren.

Insbesondere bei Verwendung in einer Flugzeugkabine als Deckendom, also mittels Deckenmontage, erhält die Diffusorplatte 10 durch einen geeigneten Radius eine Eigenspannung. Der Radius beträgt dabei bis zu 400 cm, durch die Wölbung und Eigenspannung kann auch auf sichtbare Befestigungselemente verzichtet werden. Die Diffusorplatte 10 hat in diesem Ausführungsbeispiel eine Stärke von etwa 3 mm, wobei der Abstand der LED-Leuchtmittel 8, 9 zu der Diffusorschicht 10 1 cm bis 9 cm beträgt. Das führt dazu, dass die Gesamthöhe des Gehäuses 11 kleiner als 10 cm ausgeführt werden kann. Das Verhältnis der RGB-LEDs 8 zu weißen LEDs 9 beträgt idealerweise eins zu eins, wobei die LED-Dichte vorzugsweise 250 bis 21000 LEDs pro Quadratmeter beträgt. Der Aufbau kann dann mit der Beleuchtungsseite 13 nach unten an der Decke montiert werden.

Durch eine geeignete Einzelansteuerung der LED-Leuchtmittel 8, 9 kann sowohl eine Dekorationsbeleuchtung als auch eine ausreichende Kabinenbeleuchtung erreicht werden. Es können zum Beispiel Wolkenanimationen abgebildet werden. Die Aktivierungszeit, Beleuchtungsstärke, Beleuchtungsfarbe und der Beleuchtungsbereich können beliebig festgelegt werden. Dadurch kann eine exakte vorausgehende Planung der Positionen von Leuchtkörpern entfallen. Es können statische oder animierte Inhalte großflächig angezeigt werden, welche das optische Erscheinungsbild der Kabine deutlich verändern oder zum Entertainment dienen. Das Gehäuse 11 sowie die resultierende Leuchtfläche kann sowohl als ebene oder gewölbte Fläche als auch in komplexen geometrischen 3D-Formen umgesetzt werden.

## Patentansprüche

1. Beleuchtungssystem für den Innenraum eines Fahrzeugs umfassend ein Gehäuse (11) mit einer Montageseite (12) und einer gegenüberliegenden Beleuchtungsseite (13),
- einer Mehrzahl von LED-Leuchtmitteln (8,9),
- einer auf der Montageseite (12) angeordneten Trägerschicht (14),
wobei die Mehrzahl von LED-Leuchtmitteln (8,9) in einer netzartigen Matrixstruktur auf der Trägerschicht (14) angeordnet sind,
wobei Steuerelemente und Energieversorgungselemente (17) zur signaltechnischen Ansteuerung und elektrischen Versorgung der LED-Leuchtmittel (8,9) auf der Trägerschicht (14) angeordnet sind,
wobei eine transluzente Diffusorschicht (10) beabstandet von der Trägerschicht (14) mit den LED-Leuchtmitteln (8,9) angeordnet ist und eine Leuchtfläche der Beleuchtungsseite (13) bildet, wobei
- in der netzartigen Matrixstruktur der LED-Leuchtmittel (8,9) der Abstand benachbarter LED-Leuchtmittel (8,9) in einer ersten X-Richtung genau so groß ist wie in einer zweiten, senkrecht zur X-Richtung stehenden Y-Richtung, wobei
- der Abstand zweier benachbarter LED-Leuchtmittel (8,9) 0,7 cm bis 6 cm beträgt, **dadurch gekennzeichnet, dass**
- die Dichte der LED-Leuchtmittel (8,9) auf der Trägerplatte (14) 250 bis 21000 LEDs/m² beträgt, wobei
- die transluzente Diffusorschicht (10) in einem Abstand von 1 cm bis 10 cm von der LED-Trägerschicht (14) angeordnet ist, wobei
- die Dicke der Diffusorschicht (10) 1 mm bis 10 mm beträgt.

2. Beleuchtungssystem nach Anspruch 1, **dadurch gekennzeichnet, dass** die LED-Leuchtmittel kombinierte RGBW-LEDs (8,9) umfassen.

3. Beleuchtungssystem nach Anspruch 1, **dadurch gekennzeichnet, dass** die LED-Leuchtmittel RGB-LEDs (8) und weiße LEDs (9) umfassen.

4. Beleuchtungssystem nach Anspruch 3, **dadurch gekennzeichnet, dass** das Verhältnis der Anzahl von RGB-LEDs (8) zu weißen LEDs (9) im Beleuchtungssystem eins zu eins beträgt.

5. Beleuchtungssystem nach Anspruch 4, **dadurch gekennzeichnet, dass** sowohl in X-Richtung als auch in Y-Richtung RGB-LEDs (8) und weiße LEDs (9) abwechselnd angeordnet sind.

6. Beleuchtungssystem nach einem der vorangehenden Ansprüche, **dadurch gekennzeichnet, dass** die Diffusorschicht (10) gewölbt ist.

7. Beleuchtungssystem nach einem der vorangehenden Ansprüche, **dadurch gekennzeichnet, dass** die Stärke der Diffusorschicht (10) 3 mm beträgt.

8. Beleuchtungssystem nach einem der vorangehenden Ansprüche, **dadurch gekennzeichnet, dass** die Diffusorschicht (10) aus Polycarbonat gebildet ist.

9. Beleuchtungssystem nach einem der vorangehenden Ansprüche, **dadurch gekennzeichnet, dass** die Gesamthöhe des Gehäuses (11) kleiner als 10 cm ist.

10. Beleuchtungssystem nach einem der vorangehenden Ansprüche, **dadurch gekennzeichnet, dass** Leuchtpunkte, die durch die einzelnen LED-Leuchtmittel (8,9) gebildet sind, einzeln ansteuerbar und hinsichtlich ihrer Aktivierung, Aktivierungszeit, Leuchtstärke und Leuchtfarbe individuell regelbar sind.

11. Beleuchtungssystem nach Anspruch 10, **dadurch gekennzeichnet, dass** eine Interaktionsvorrichtung vorgesehen ist, über welche die Beleuchtung durch einen Benutzer mittels einer Steuerungssoftware manuell einstellbar ist.

## Claims

1. Lighting system for the interior of a vehicle, comprising a housing (11) having a mounting side (12) and an opposite lighting side (13),
- a plurality of LED lamps (8,9),
- a support layer (14) arranged on the mounting side (12),
wherein the plurality of LED lamps (8,9) are arranged in a grid-like matrix structure on the support layer (14),
wherein control elements and energy supply elements (17) for signal-control of and electrical supply to the LED lamps (8,9) are arranged on the support layer (14),
wherein a translucent diffuser layer (10) is arranged so as to be spaced apart from the support layer (14), which has the LED lamps (8,9), and forms a light surface of the lighting side (13), wherein
- in the grid-like matrix structure of the LED lamps (8,9), the distance between adjacent LED lamps (8,9) in a first X-direction is exactly as large as in a second Y-direction perpendicular to the X-direction, wherein
- the distance between two adjacent LED lamps (8,9) is 0.7 cm to 6 cm, **characterized in that**
- the density of the LED lamps (8,9) on the support panel (14) is 250 to 21000 LEDs/m², wherein
- the translucent diffuser layer (10) is arranged at a distance of 1 cm to 10 cm from the LED support layer (14), wherein
- the thickness of the diffuser layer (10) is 1 mm to 10 mm.

2. Lighting system according to claim 1, **characterized in that** the LED lamps comprise combined RGBW LEDs (8,9).

3. Lighting system according to claim 1, **characterized in that** the LED lamps comprise RGB LEDs (8) and white LEDs (9).

4. Lighting system according to claim 3, **characterized in that** the ratio of the number of RGB LEDs (8) to white LEDs (9) in the lighting system is one to one.

5. Lighting system according to claim 4, **characterized in that** RGB LEDs (8) and white LEDs (9) are arranged alternately in both the X-direction and the Y-direction.

6. Lighting system according to any of the preceding claims,
**characterized in that** the diffuser layer (10) is curved.

7. Lighting system according to any of the preceding claims,
**characterized in that** the thickness of the diffuser layer (10) is 3 mm.

8. Lighting system according to any of the preceding claims,
**characterized in that** the diffuser layer (10) is made of polycarbonate.

9. Lighting system according to any of the preceding claims,
**characterized in that** the total height of the housing (11) is less than 10 cm.

10. Lighting system according to any of the preceding claims,
**characterized in that** light points, which are formed by the individual LED lamps (8,9), can be individually controlled and can be individually regulated with regard to the activation, activation time, light intensity and light color thereof.

11. Lighting system according to claim 10, **characterized in that** an interaction device is provided via which the lighting can be manually adjusted by a user by means of control software.

## Revendications

1. Système d'éclairage pour l'espace intérieur d'un véhicule, comprenant un boîtier (11) avec un côté montage (12) et un côté éclairage (13) opposé,
- une pluralité de moyens d'éclairage à LED (8, 9),
- une couche de support (14) disposée sur le côté montage (12),
dans lequel la pluralité de moyens d'éclairage à LED (8, 9) sont disposés en une structure matricielle réticulaire sur la couche de support (14),
dans lequel des éléments de commande et des éléments d'alimentation en énergie (17) pour la commande de la technique de signalisation et l'alimentation électrique des moyens d'éclairage à LED (8, 9) sont disposés sur la couche de support (14),
dans lequel une couche de diffusion translucide (10) est disposée à distance de la couche de support (14) comportant les moyens d'éclairage à LED (8, 9) et forme une surface lumineuse du côté éclairage (13), dans lequel
- dans la structure matricielle réticulaire des moyens d'éclairage à LED (8, 9), la distance entre des moyens d'éclairage à LED (8, 9) voisins est exactement aussi grande dans une première direction X que dans une deuxième direction Y perpendiculaire à la direction X,
dans lequel
- la distance entre deux moyens d'éclairage à LED (8, 9) voisins est de 0,7 cm à 6 cm,
**caractérisé en ce que**
- la densité des moyens d'éclairage à LED (8, 9) sur la plaque de support (14) est de 250 à 21 000 LED/m², dans lequel
- la couche de diffusion translucide (10) est disposée à une distance de 1 cm à 10 cm de la couche de support de LED (14), dans lequel
- l'épaisseur de la couche de diffusion (10) est de 1 mm à 10 mm.

2. Système d'éclairage selon la revendication 1, **caractérisé en ce que** les moyens d'éclairage à LED comprennent des LED RGBW combinées (8, 9).

3. Système d'éclairage selon la revendication 1, **caractérisé en ce que** les moyens d'éclairage à LED comprennent des LED RGB (8) et des LED blanches (9).

4. Système d'éclairage selon la revendication 3, **caractérisé en ce que** le rapport entre le nombre de LED RGB (8) et le nombre de LED blanches (9) dans le système d'éclairage est de un à un.

5. Système d'éclairage selon la revendication 4, **caractérisé en ce que** des LED RGB (8) et des LED blanches (9) sont disposées en alternance à la fois dans la direction X et dans la direction Y.

6. Système d'éclairage selon l'une des revendications précédentes, **caractérisé en ce que** la couche de diffusion (10) est bombée.

7. Système d'éclairage selon l'une des revendications précédentes, **caractérisé en ce que** l'épaisseur de la couche de diffusion (10) est de 3 mm.

8. Système d'éclairage selon l'une des revendications précédentes, **caractérisé en ce que** la couche de diffusion (10) est formée de polycarbonate.

9. Système d'éclairage selon l'une des revendications précédentes, **caractérisé en ce que** la hauteur totale du boîtier (11) est inférieure à 10 cm.

10. Système d'éclairage selon l'une des revendications précédentes, **caractérisé en ce que** les points lumineux qui sont formés par les sources lumineuses à LED individuelles (8, 9) peuvent être commandés individuellement et réglés individuellement en ce qui concerne leur activation, leur temps d'activation, leur intensité lumineuse et leur couleur d'éclairage.

11. Système d'éclairage selon la revendication 10, **caractérisé en ce qu'**il est prévu un dispositif d'interaction par lequel l'éclairage peut être réglé manuellement par un utilisateur au moyen d'un logiciel de commande.
